# EUROPEAN PATENT SPECIFICATION

(11) **EP 3 035 212 B1**
(45) Date of publication and mention of the grant of the patent: **21.07.2021**
(21) Application number: 15181709.5
(22) Date of filing: 20.08.2015
(51) Int. Cl.: G06F 16/182, G06F 16/21, G06F 16/22, G06F 16/25, G06F 16/28

(54) **TRANSPARENT DATABASE TABLE REPLACEMENT**
TRANSPARENTER DATENBANKTABELLENERSATZ
REMPLACEMENT DE TABLE DE BASE DE DONNÉES TRANSPARENTE

(30) Priority: 15.12.2014 US 201414570672
(43) Date of publication of application: 22.06.2016
(73) Proprietor: SAP SE, 69190 Walldorf (DE)
(72) Inventor: STORK, Christian, 69190 Walldorf (DE); HOEFT, Kerstin, 69190 Walldorf (DE); BECKER, Frank, 69190 Walldorf (DE); ROEDEL, Bernd, 69190 Walldorf (DE); BEISSEL, Thomas, 69190 Walldorf (DE)
(74) Representative: Richardt Patentanwälte PartG mbB

(56) References cited:
- US-A1- 2002 184 228
- US-A1- 2011 047 171
- US-B1- 6 678 674
- None

## Description

### Field of the invention

The invention relates to databases, in particular to the replacement of tables with views.

### Background and related art

As new database features are made available to developers by database management systems, a need to re-code software or manually replace items in the database sometimes arises. But such approaches are fraught with difficulties.

There is therefore room for improvement.

US6678674 B1 discloses a database building technique for translating database retrieval requests into normalized database query statements employing a data dictionary.

### Summary

The invention provides for a method, an application server, and distributed database system in the independent claims. Embodiments are given in the dependent claims.

The invention provides for a method of operating a distributed database system. The database system comprises a network connection. The database system further comprises a database server. The database server comprises a database management system for managing at least one table and at least one replacement view. In other words there is at least one table of the database that is replaced by a replacement view. The database system further comprises an application server. The application server comprises an instance of a runtime interpreter.

The application server comprises an instance of a database interface. The database interface is configured for sending a second database query to the database management system via the network connection. The database interface is further configured for receiving database data from the database management system via the network connection. The application server comprises a dictionary. The dictionary comprises a mapping descriptive of an assignment of a legacy table to a replacement view. The legacy table is one of the at least one tables. The replacement view is one of the at least one replacement view.

The method comprises receiving a first database query for the legacy table by the runtime interpreter. This could for example be generated by an application that is running within the application server or it may be received from another system or server that is connected through an additional network connection. The method further comprises replacing the first database query with the second database query by the runtime interpreter using the mapping in the dictionary.

The method further comprises sending the second database query to the database server via the network connection. The method further comprises retrieving the database data from the replacement view by the database server. The method further comprises forwarding the database data from the database server to the application server via the network connection.

This method may have the benefit that the legacy table can be replaced by the replacement view without needing to modify database queries that are supplied to the runtime interpreter. For example an application may send a request to the runtime interpreter for a query to the legacy table. The mapping is then used to modify the database query such that the replacement view is queried instead. This may lead to significant increases in the speed of providing the database data.

In another embodiment the method comprises adding a replacement view to the database management system before receiving a first database query for the legacy table by the runtime interpreter. Adding the replacement view to the database management system comprises receiving the replacement view by the database management system. Adding the replacement view to the database management system further comprises receiving the mapping descriptive of an assignment legacy table to the replacement view. Adding the replacement view to the database management system further comprises verifying the replacement view by runtime interpreter via the network connection. Adding the replacement view to the database management system further comprises activating the replacement view by the runtime interpreter if the verification is successful. This embodiment may have the benefit of providing for a more robust replacement of the legacy table by the replacement view. The verification ensures that the replacement view will actually function properly.

In another embodiment, verifying the replacement view by the runtime interpreter via the network connection comprises checking any one of the following: wherein verifying the replacement view by the runtime interpreter via the network connection comprises checking any one of the following: that the legacy table and the replacement view have an identical number of columns, that the legacy table columns and the replacement view columns have identical names and an identical sequence, that the legacy table columns and the replacement view column have identical type information, that the legacy table columns and the replacement view columns have identical data type, that the legacy table columns and the replacement view columns have an identical length, that the legacy table columns and the replacement view columns express decimals identically, and combinations thereof. This embodiment may have the advantage that the replacement view can be used without needing to replace or modify application programs that use the database system

In another embodiment, the legacy table and the replacement view have an identical number of columns. This embodiment may have the advantage that the replacement view can be used without needing to replace or modify application programs that use the database system.

In another embodiment the legacy table columns and the replacement view columns have identical names and an identical sequence. This embodiment may have the advantage that the replacement view can be used without needing to replace or modify application programs that use the database system.

In another embodiment, the legacy table columns and the replacement view have identical type information. This may have the advantage that the replacement view can be used without needing to replace or modify application programs that use the database system.

In another embodiment, the legacy table columns and the replacement view have identical data type. This embodiment may have the advantage that the replacement view can be used without needing to replace or modify application programs that use the database system.

In another embodiment, the legacy table columns and the replacement view columns have an identical length. This embodiment may have the advantage that the replacement view can be used without needing to replace or modify application programs that use the database system.

In another embodiment, the legacy table columns and the replacement view columns express decimals identically. This embodiment may have the advantage that the replacement view can be used without needing to replace or modify application programs that use the database system.

In another embodiment, the distributed database system further comprises an application. The method further comprises generating the first database query by the application. The method further comprises sending the first database query to the runtime interpreter by the application. The application for example may be implemented on the same server as the application server. In other instances the application may be located or implemented on a different computer system or server and connect to the application server by an additional network connection. This embodiment may have the advantage that if the application is written to use the legacy table the replacement table may be used instead without having to reprogram or recode the application.

In another embodiment, the legacy table has a legacy table name. The replacement view has a replacement view name. The replacement wherein the replacing the first database query with the second database query by the runtime interpreter using the mapping in the table is performed by replacing the legacy table name in the first database query with the replacement view name. This embodiment may have the advantage that the replacement view can be used without needing to replace or modify application programs that use the database system. This embodiment may further have the advantage that if the replacement view is a DDL view it may result in significant performance gains over querying the legacy table.

In another embodiment, the second database query is an SQL query. The runtime interpreter may generate an SQL query that is tailored for the particular database table or replacement view. This may have the advantage of facilitating the use of different types of database tables and views used.

In another embodiment, the first database query is an Open SQL query. The use of Open SQL may facilitate the mapping of the legacy table to the replacement view.

In another embodiment, the runtime interpreter is an Advanced Business Application Programming, also known as a Allgemeiner Berichts-Aufbereitungs-Prozessor, (ABAP) interpreter. The use of an ABAP interpreter may facilitate the efficient replacement of the legacy table with the replacement view. It may also have the benefit of enabling the using a DDL views as the replacement view, which may result in significant performance gains when performing a query.

In another embodiment, the replacement view is a Data Definition Language (DDL) view. The use of DDL views may result in a significant performance gains without causing excessive data transport between different layers in the database system. The use of DDL views enables high performance gains while still working on original data.

In another aspect, the invention provides for an application server configured for connecting to a database server via a network connection. The database server comprises a database management system for managing at least one table and at least one replacement view. The application server comprises an instance of a runtime interpreter. The application server further comprises an instance for an implementation of a database interface. The database interface is configured for sending a second database query to the database management system via the network connection. The database interface is further configured for receiving database data from the database management system via the network connection. The application server comprises a dictionary. The dictionary comprises a mapping descriptive of an assignment of a legacy table to a replacement view. The legacy table is one of the at least one tables. The replacement view is one of the at least one replacement views. The application server further comprises a memory containing machine-executable instructions. The application server further comprises a processor.

Execution of the machine-executable instructions causes the processor to receive a first database query by the runtime interpreter for the legacy table. Execution of the machine-executable instructions further cause the processor to replace the first database query with the second database query by the runtime interpreter using the mapping in the table. Execution of the machine-executable instructions further cause the processor to forward the second database query to the database management system using the database interface via the network connection. Execution of the machine-executable instructions further cause the processor to receive the database data from the database management system using the database interface via the network connection. In some examples the processor may be additionally programmed to forward the database data to an application via an additional network connection. The advantages of this embodiment have been previously discussed.

In another embodiment execution of the machine-executable instructions further cause the processor to receive the mapping descriptive of the assignment of the legacy table to the replacement view made in the database management system. Execution of the machine-executable instructions further cause the processor to verify the replacement view by the runtime interpreter by querying the database system via the network connection. Execution of the machine-executable instructions further cause the processor to activate the replacement view by the runtime interpreter if the verification is successful. When the replacement view is activated in the mapping then when the runtime interpreter receives the first database query it is then replaced by the second database query. The advantages of this embodiment has been previously discussed.

In another embodiment, the verification of the replacement view by the runtime interpreter via the network connection comprises checking any one of the following: : wherein verifying the replacement view by the runtime interpreter via the network connection comprises checking any one of the following: that the legacy table and the replacement view have an identical number of columns, that the legacy table columns and the replacement view columns have identical names and an identical sequence, that the legacy table columns and the replacement view column have identical type information, that the legacy table columns and the replacement view columns have identical data type, that the legacy table columns and the replacement view columns have an identical length, that the legacy table columns and the replacement view columns express decimals identically, and combinations thereof. The advantages of this embodiment have been previously discussed.

In another example, the invention provides for a distributed database system comprising an application server according to an embodiment. The distributed database system further comprises the network connection and a database server.

In another embodiment, the distributed database system further comprises an application. The application is configured to generate the first database query, send the first database query to the runtime interpreter by the application, and to receive the database data from the application server.

In one embodiment, a method of controlling database operations at runtime of an application comprises, at runtime of an application, receiving a request from the application to perform an operation on a database table via a database table identifier; detecting that a replacement database view with a database view identifier has been specified for the database table; and when translating the request to perform the operation, substituting the database view identifier for the database table identifier, thereby replacing the database table with the replacement database view transparently to the application.

In another embodiment, a system controlling database operations performed by an application comprises a data dictionary comprising (a) a description of a database view comprising a database view identifier; and (b) a description of a database table comprising a database table identifier, wherein the description of the database table comprises a reference to the database view and an indication that the database view is to replace the database table; an application execution engine comprising (c) a view object comprising a reference to a database view; and (d) a table object comprising a reference to the view object and an indication that the view object is to be used in place of a table represented by the table object; wherein the application execution engine is configured to, responsive to receiving an operation from the application specifying the database table identifier, detecting that the table object representing the database table specified by the database table identifier indicates that the view object is to be used in place of the database table, and responsive to so detecting, substituting the reference to the database view specified by the view object in place of the database table identifier for the operation.

In another embodiment, one or more computer-readable media comprise computer-executable instructions causing a computing system to perform a method comprising reading a data dictionary comprising a classic database view description describing a classic database view and an enhanced database view description describing an enhanced database view, wherein the data dictionary specifies that the enhanced database view is to replace the classic database view; confirming that the classic database view description and the enhanced database view description indicate congruent description for the classic database view and the enhanced database view, wherein the confirming comprises performing a congruence check; based on the enhanced database view description, creating an enhanced view object stored in memory comprising a reference to the enhanced database view; based on the classic database view description, creating a classic view object stored in memory indicating that the classic database view is replaced by the enhanced database view, wherein the classic view object comprises a reference to the enhanced view object; and at runtime, when receiving a request to perform an operation on the classic database view, detecting that the classic view object indicates that the classic database view is to be replaced by the enhanced database view, verifying that the classic view object indicates that the congruence check was successful, substituting the enhanced database view for the classic database view, and performing the operation on the enhanced database view instead of the classic database view.

As described herein, a variety of other features and advantages can be incorporated into the technologies as desired.

In one aspect, the invention provides for a method of controlling database operations at runtime of an application, the method comprising:
at runtime of an application, receiving a request from the application to perform an operation on a database table via a database table identifier;
detecting that a replacement database view with a database view identifier has been specified for the database table; and
when translating the request to perform the operation, substituting the database view identifier for the database table identifier, thereby replacing the database table with the replacement database view transparently to the application.

In another aspect the invention provides for one or more computer-readable media comprising computer-executable instructions that when executed cause a computing system to perform the method of claim 1.

In another embodiment responsive to the request from the application, performing the operation on the replacement database view instead of the database table.

In another embodiment performing the operation comprises: submitting the translated request to perform the operation to a database management system.

In another embodiment the method further comprises: at runtime, determining whether the operation comprises a SELECT statement;
wherein the substituting is performed responsive to determining that the operation does comprise a SELECT statement.

In another embodiment the replacement database view is provided by an enhanced database service providing view functionality beyond that of an SQL engine.

In another embodiment the method comprises in memory, storing a table object representing the database table, wherein the table object comprises a stored replacement indication that the database table is replaced by the replacement database view and a reference to a view object for the database view; and in memory, storing the view object, wherein the view object comprises a reference to the replacement database view.

In another embodiment the method comprises detecting that a replacement database view has been specified for the database table comprises evaluating the stored replacement indication in the table object.

In another embodiment, the method further comprises following the reference to the view object; and retrieving the database view identifier from the view object.

In another embodiment, the method further comprises responsive to encountering a REPLACE directive in a data dictionary, storing the replacement indication in the table object.

In another embodiment, the table object comprises an incongruence flag indicating incongruence between the database table and the replacement database view; wherein the method further comprises: after detecting that the replacement database view has been specified, via the incongruence flag, detecting that no incongruence exists between the database table and the replacement database view.

In another embodiment, the method further comprises detecting a modification of a data dictionary describing the database table and the replacement database view; and responsive to detecting the modification, validating congruence between the database table and the replacement database view.

In another embodiment, the method further comprises responsive to detecting incongruence between the database table and the replacement database view, raising an error condition.

In another aspect, the invention provides for a system controlling database operations performed by an application, the system comprising: a data dictionary comprising:
a description of a database view comprising a database view identifier; and a description of a database table comprising a database table identifier, wherein the description of the database table comprises a reference to the database view and an indication that the database view is to replace the database table;
an application execution engine comprising:
   a view object comprising a reference to a database view; and
   a table object comprising a reference to the view object and an indication that the view object is to be used in place of a table represented by the table object;
wherein the application execution engine is configured to:
   responsive to receiving an operation from the application specifying the database table identifier, detecting that the table object representing the database table specified by the database table identifier indicates that the view object is to be used in place of the database table, and responsive to so detecting, substituting the reference to the database view specified by the view object in place of the database table identifier for the operation.

In another embodiment, the application execution engine is further configured to build the view object and the table object based on the data dictionary.

In another embodiment, the system further comprises an SQL engine operable to perform SQL operations on a database; wherein the application execution engine forwards the operation to the SQL engine after substituting the reference to the database view in place of the database table identifier.

In another embodiment, the table object further comprises an incongruence flag indicative of whether the database table and the database view have congruent descriptions.

In another embodiment, the application execution engine inhibits activation of the database table until the database table and the database view are congruent.

In another embodiment, the database view is provided by an enhanced database service providing view functionality beyond that of a lower database layer.

In another aspect the invention provides for one or more computer-readable media comprising computer-executable instructions causing a computing system to perform a method comprising:
reading a data dictionary comprising a classic database view description describing a classic database view and an enhanced database view description describing an enhanced database view, wherein the data dictionary specifies that the enhanced database view is to replace the classic database view;
confirming that the classic database view description and the enhanced database view description indicate congruent description for the classic database view and the enhanced database view, wherein the confirming comprises performing a congruence check;
based on the enhanced database view description, creating an enhanced view object stored in memory comprising a reference to the enhanced database view; based on the classic database view description, creating a classic view object stored in memory indicating that the classic database view is replaced by the enhanced database view, wherein the classic view object comprises a reference to the enhanced view object; and
at runtime, when receiving a request to perform an operation on the classic database view, detecting that the classic view object indicates that the classic database view is to be replaced by the enhanced database view, verifying that the classic view object indicates that the congruence check was successful, substituting the enhanced database view for the classic database view, and performing the operation on the enhanced database view instead of the classic database view.

It is understood that one or more of the aforementioned embodiments of the invention may be combined as long as the combined embodiments are not mutually exclusive.

### Brief description of the drawings

In the following preferred embodiments of the invention will be described, by way of example only, and with reference to the drawings in which:
Fig. 1 is a block diagram of an example system for implementing transparent database table replacement;
Fig. 2 is a flowchart of an example method of implementing transparent database table replacement;
Fig. 3 is a flowchart of an example method implementing configuration before performing transparent database replacement;
Fig. 4 is a flowchart of an example method of implementing transparent database table replacement at runtime;
Fig. 5 is a block diagram of an example table-view mapping using a table object and a view object;
Fig. 6 is a block diagram of an example table object;
Fig. 7 is a flowchart of an example method implementing table-view congruence validation after a view has been modified;
Fig. 8 is a diagram of an example computing system in which described embodiments can be implemented;
Fig. 9 shows an example of a distributed database system;
Fig. 10 is a block diagram of a method of operating the distributed database system; and
Fig. 11 is a block diagram of a method of adding a replacement view to a database management system.

### Detailed Description

Like numbered elements in these figures are either equivalent elements or perform the same function. Elements which have been discussed previously will not necessarily be discussed in later figures if the function is equivalent.

### Example 1 - Example Overview

New functionality may be offered by a database management system in the form of views. Application developers may wish to immediately take advantage of such functionality by replacing tables with views. The technologies herein allow such replacement to be performed transparently to applications. For example, a simple configuration change can avoid re-coding the application or manually replacing the table with a view.

Developers can thus benefit from the technologies. End users also benefit in that applications can incorporate enhanced functionality sooner.

### Example 2 - Example System Implementing Transparent Database Table Replacement

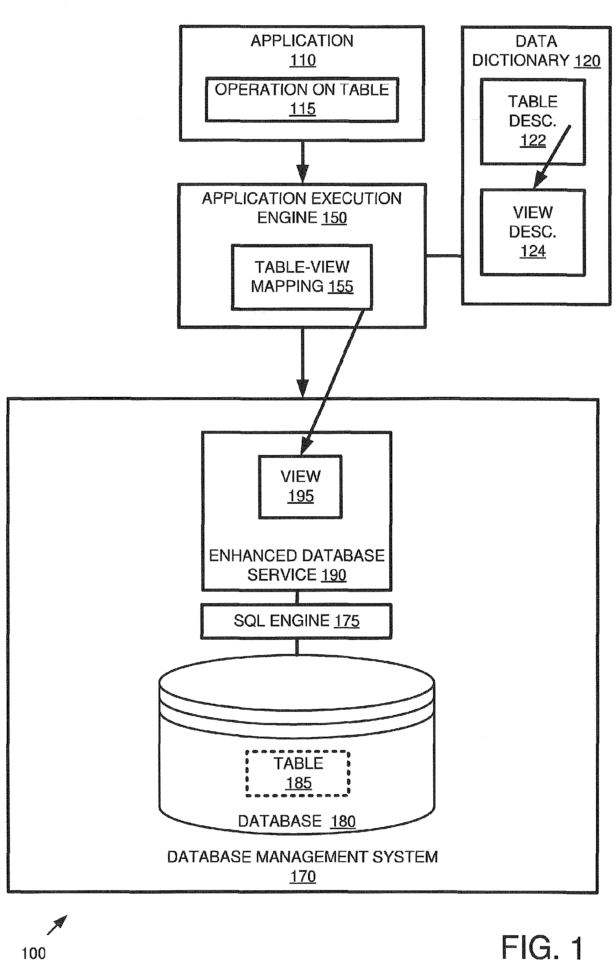

FIG. 1 is a block diagram of an example system 100 implementing transparent database table replacement as described herein. The system 100 can control database operations performed by an application 110.

In the example, an application 110 includes an operation 115 on a database table 185. The application 110 is executed by an application execution engine 150, which receives a request from the application 110 to perform an action on the table 185. The execution engine 150 includes a table-view mapping 155 that maps the replaced table to the view that replaces it. The mapping 155 can be constructed based on the data dictionary 120, which comprises a description 122 of the table 185 with a table identifier and a description 124 of the view 195 with a view identifier. As described herein, the table description 122 can include a reference to the view 195 and an indication that the database view is to replace the database table.

The application engine 150 achieves execution of the application 110 by processing commands, including a database operation 115 on the table 185. Database operations are translated and passed to the database management system 170.

The database management system 170 can receive operations to be performed on the database 180. In practice, an SQL engine 175 can implement the operations on the database 180. In some embodiments, an enhanced database service 190 can provide richer functionality beyond that available via the SQL engine 175. For example, the view 195 can be provided by such enhanced database services 190. Other unenhanced operations can go (e.g., directly or pass through) to the SQL engine 175.

The application execution engine 150 can inhibit activation of the database table 185 until the database table 185 and the database view 195 are congruent as described herein.

In any of the examples herein, although some of the subsystems are shown on a single page, in practice, they can be implemented as computing systems having more than one device. Boundaries between the components can be varied. For example, although the database management system 170 is shown as a single entity, it can be implemented by a plurality of devices.

In practice, the systems shown herein, such as system 100, can vary in complexity, with additional functionality, more complex components, and the like. For example, additional components can be included to implement security, redundancy, load balancing, report design, single sign on, and the like.

In practice, a large number of different applications 110 and application execution engine 150 instances (e.g., executing at plural instances of a client system, in the cloud, or the like) can be supported.

The described computing systems can be networked via wired or wireless network connections. Alternatively, systems can be connected through an intranet connection (e.g., in a corporate environment, government environment, or the like).

The system 100 and any of the other systems described herein can be implemented in conjunction with any of the hardware components described herein, such as the computing systems described below (e.g., processing units, memory, and the like). In any of the examples herein, the inputs, outputs, requests, data dictionaries, mappings, objects, databases, and environments can be stored in one or more computer-readable storage media or computer-readable storage devices. The technologies described herein can be generic to the specifics of operating systems or hardware and can be applied in any variety of environments to take advantage of the described features.

### Example 3 - Example Method Implementing Transparent Database Table Replacement

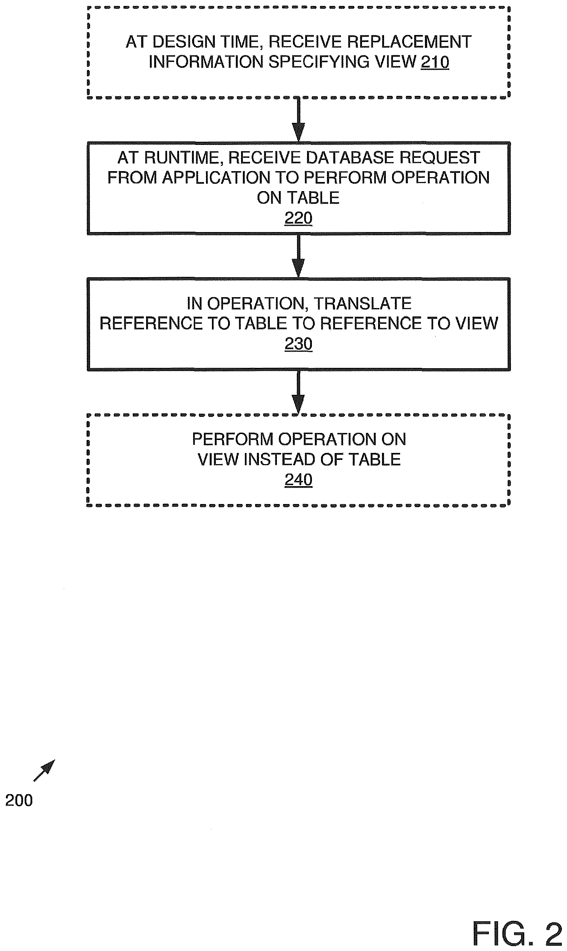

FIG. 2 is a flowchart of an example method 200 of transparent database table replacement and can be implemented, for example, in the system shown in FIG. 1. The example includes design time and runtime activities. Various parts of the overall method are described in more detail separately herein and can be performed separately.

At 210, at design time of the application, replacement information specifying the view to replace a table is received. For example, as described herein, an indication of replacement (e.g., a REPLACE statement that the table is to be replaced with the view) can be placed in a data dictionary. As described herein, validation can be performed to verify congruence between the table and the view.

At 220, at runtime of the application, a request from the operation to perform an operation on a table is received. As described herein, it can be detected that a replacement view has been put into place for the table.

At 230, in the operation, the reference to the table is translated (e.g., redirected) to a reference to the view. For example, an identifier of the view can be substituted for an identifier of the table. In other words, the table identifier is replaced by the view identifier.

At 240, the operation is performed on the view instead of the table. Such an act is performed responsive to the request to perform the operation on the table. Thus, the replacement of the table with the view is performed transparently to the program.

Changes made to the table or view can result in re-validation as described herein.

The method 200 and any of the other methods described herein can be performed by computer-executable instructions (e.g., causing a computing system to perform the method) stored in one or more computer-readable media (e.g., storage or other tangible media) or stored in one or more computer-readable storage devices. Such methods can be performed in software, firmware, hardware, or combinations thereof. Such methods can be performed at least in part by a computing system (e.g., one or more computing devices).

The illustrated actions can be described from alternative perspectives while still implementing the technologies. For example, for 220 "receive request from application" can also be described as "send request to application execution engine."

### Example 4 - Example Application

In any of the examples herein, an application can be a software application that includes operations performed on a database. Such applications can be of a variety of languages and typically include a facility for performing operations on database tables and views (e.g., via SQL or an SQL-like language).

### Example 5 - Example Database Operations

In any of the examples herein, an operation on a database can be any of the familiar create, retrieve, update, and delete functions; operations performed via SQL (e.g., SELECT, UPDATE, INSERT or the like); as well as any number of other operations that depend on database functionality.

An implementation can limit table replacement to certain statements (e.g., SELECT). Thus, it can be determined at runtime whether the operation comprises a SELECT statement, and responsive to determining that the operation does comprise a SELECT statement, performing replacement (or substitution, redirection, or the like) for the SELECT statement. In an operation, a reference to a table in other statements (e.g., UPDATE, INSERT, or the like) can be left un-replaced. Such statements can continue to be performed on the (original) table.

In this way, transparent database table replacement can be performed selectively based on the type of statement in the operation. The technology can select between performing replacement and not performing replacement based on the statement type (e.g., whether the statement is a SELECT statement) in an operation.

### Example 6 - Example Application Execution Engine

In any of the examples herein, an application execution engine can take the form of an engine configured to accept and execute application code. For example, a virtual machine can accept commands as source code, object code, generated byte code (e.g., based on source code), or the like. Engines such as Java virtual machines, application servers, or the like can be supported. The technologies described herein can be implemented in any of a variety of languages, including Java, Advanced Business Application Programming (ABAP), or the like.

As described herein, the application execution engine can access a data dictionary to determine how to interact with a database. The application execution engine can accept database-independent statements (e.g., in Open SQL or the like) and translate them into statements understood by the underlying database management system (e.g., native SQL or the like).

### Example 7 - Example Data Dictionary

In any of the examples herein, a data dictionary can include descriptions (e.g., metadata) of database elements such as tables, views, indexes, and the like. The data dictionary can follow a syntax that allows specification of attributes and features of such database elements. In practice, the data dictionary can be examined by an application execution engine when interacting with a database.

The data dictionary can include new dictionary objects that are supported by an enhanced database service as described herein. For example, views with enhanced functionality can be included.

### Example 8 - Example Database View

In any of the examples herein, the view can be provided by an enhanced database service providing view functionality beyond that of an SQL engine as described herein.

In a simple case, the view can merely mirror the database table it is to replace but be specified as to be provided by the enhanced database service. In this way, classic functionality of the table can be provided, but optimizations or other functionality can be provided by the enhanced database service.

Although examples show a view providing functionality beyond that of a classic SQL engine that replaces a table, the replaced table can instead be a classic view without enhanced functionality and still benefit from the technologies described herein. Thus, a second view (e.g., enhanced) can transparently replace a first (e.g., classic) view if desired. Therefore, in any of the examples herein, a first (e.g., classic) view can be implemented instead of a table (e.g., and classic view objects used in place of table objects, and so forth), and the described view becomes a second view that replaces the first.

### Example 9 - Example Table and View Identifiers

In any of the examples herein, a table identifier can take the form of a table name or other indication that identifies the table. In practice, software may use a token or other indicia to uniquely identify a table. Views can be similarly identified.

### Example 10 - Example Configuration Method

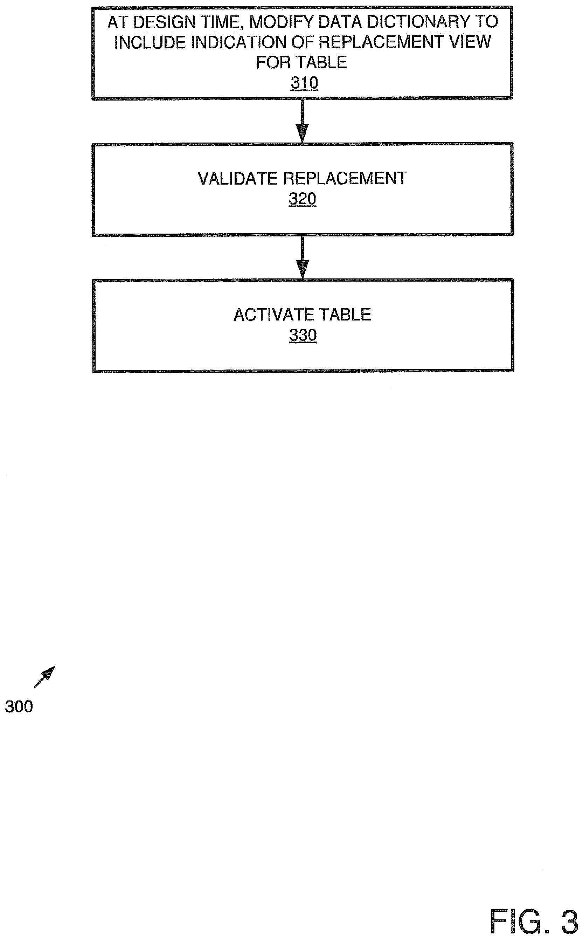

FIG. 3 is a flowchart of an example method 300 of implementing configuration for transparent database table replacement and can be implemented, for example, in the system shown in FIG. 1. For example, the method can be performed as part of 210 of the method of FIG. 2 and completed before runtime.

At 310, at design time of the application, a data dictionary is modified to include an indication of the replacement view for the database table. For example, a replace statement or parameter can be specified in the description of the table to refer to the view (e.g., a view identifier, view object, or the like).

At 320, the replacement is validated. For example, upon detecting that the data dictionary specifies a replacement for the table, congruence between the table and the view replacing it can be validated. For example, if the table and the view have the same fields in the same sequence, with the same data types (e.g., and lengths, precision, etc.), congruence is indicated. Otherwise incongruence (e.g., no congruence, inconsistency, or the like) is indicated, and validation fails. Other items in the description (e.g., keys) can be different.

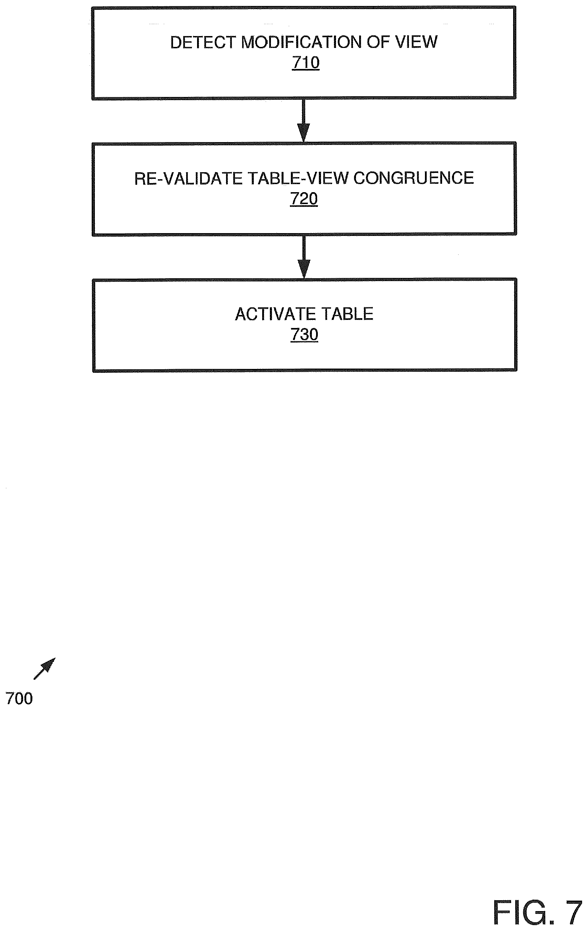

Further details and alternatives concerning validation are described in the description of FIG. 7.

At 330, responsive to successful validation (e.g., congruence between the table and view), the table is activated.

Execution of the application can then proceed, and the table is replaced with the view transparently as described herein.

Changes made to the description of the table or view in the data dictionary can result in revalidation.

### Example 11 - Example Method of Implementing Transparent Database Table Replacement at Runtime

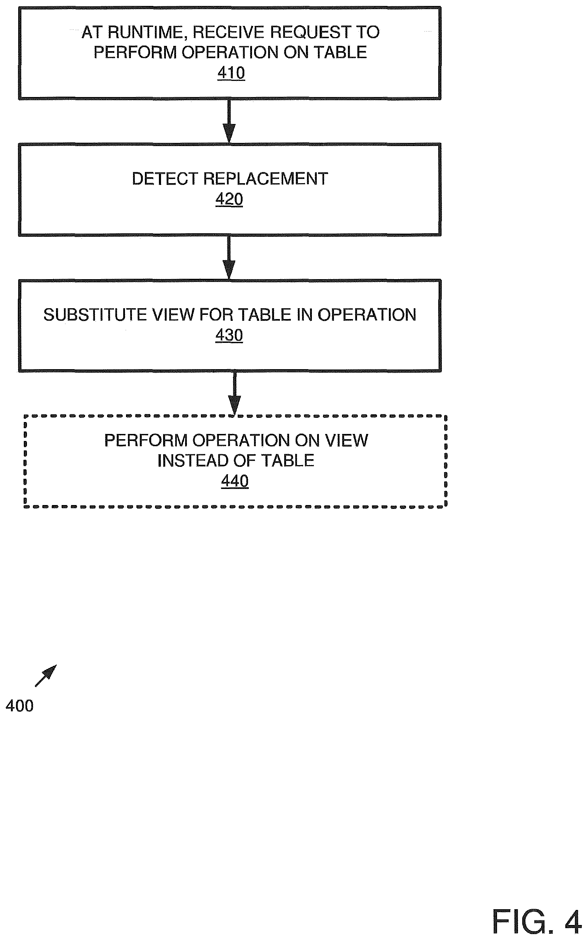

FIG. 4 is a flowchart of an example method 400 of implementing transparent database table replacement at runtime and can be implemented, for example, in the system shown in FIG. 1. For example, the method 400 can be used to achieve 230-240 of FIG. 2. The method 400 can control (e.g., redirect) database operations at runtime of an application.

Various configuration can be performed in advance of the method 400 as described herein. For example, the table and view can be activated, a table object and a view object can be created and stored in memory, and the like.

At 410, at runtime, a request to perform an operation on a table is received from an application by an application execution engine. The request can specify the operation via a database table identifier. Such a request can take the form of encountering an instruction in the application that specifies the database table identifier. In practice, interpreted, compiled, and just-in-time compiled implementations can be supported. Operations on databases can include the familiar create, retrieve, update, delete functions or any other database operations (e.g., SELECT statements or the like).

At 420, it is detected that the table has been replaced with a view. The view can be specified via a database view identifier. For example, the table object consulted by the execution engine can include an indication that the table has been replaced as described herein. A reference to the view object, view identifier, or the like can be stored by the table object. In practice, the indication can be the view identifier (e.g., a null identifier indicates no replacement).

To achieve execution of the operation, the application execution engine can translate the operation into a form suitable for execution by the database management system. At 430, when translating the request to perform the operation, the view identifier is substituted for the table identifier in the operation. In this way, the database table is replaced with the database view transparently to the application.

At 440, the operation is performed on the view instead of the table. The operation is thus performed responsive to the request from the application. The translated request can be submitted to a database management system, which performs the operation. In practice, the database management system can provide enhanced services that can involve submission of instructions to an SQL engine, calculation engine, SQL script, or combinations thereof.

As described herein, a mapping can be stored in memory to achieve replacement. For example, objects representing the table and view can be stored.

### Example 12 - Example Table-View Mapping

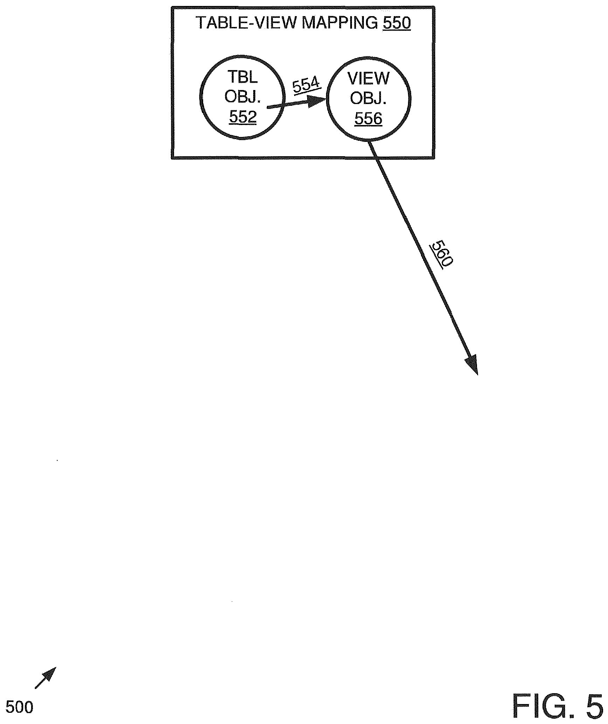

FIG. 5 is a block diagram of an example system 500 implementing a table-view mapping 550 that can be used in any of the examples herein (e.g., the mapping 155).

In the example, a table object 552 is stored in memory and represents the database table that is being replaced. The table object 552 can include a reference 554 to a view object 556 that represents the database view that is replacing the table. The view object 556 can include a reference 560 to the database view that replaces the table.

Such objects 552, 556 can be stored and examined by the application execution engine at runtime to achieve operations performed on tables, views, and the like.

### Example 13 - Example Table Object

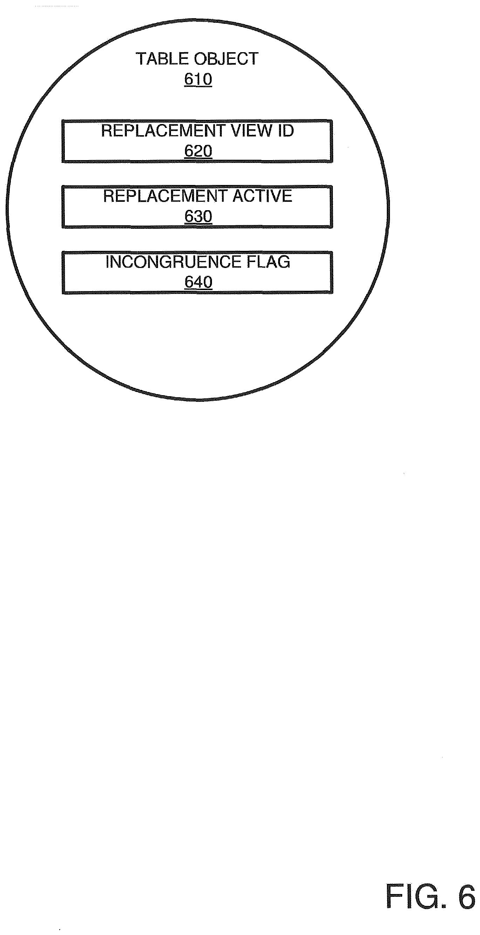

FIG. 6 is a block diagram of an example table object 610 that can be used in any of the examples herein (e.g., the table object 552) to represent a table being replaced as described herein. Such an object 610 can be stored to represent the database table at runtime.

In the example, the table object 610 is stored in memory and represents the database table that is being replaced. The object 610 can be consulted at runtime to detect whether the represented table is replaced by a view. A view object can be similarly stored in memory at runtime and can include a reference to the database view.

The object 610 comprises a replacement view identifier 620 (e.g., an identifier of the view or an object representing the view), an indication of replacement 630 (e.g., whether a replacement is active), and an incongruence flag 640 (e.g., indicating whether the table and the view are congruent as described herein).

The replacement view identifier 620 can serve as a reference to a view object for
The indication of replacement 630 can serve as a replacement indication that the database table is replaced by the database view. Detecting that a replacement view has been specified for the database table can comprise evaluating the stored replacement indication in the table object.

At runtime, the reference to the view object (e.g., in the table object) can be followed, and the database view identifier can be retrieved from the view object.

The table and view objects can be built based on the data dictionary. For example, responsive to encountering a REPLACE directive in the data dictionary, the replacement indication can be stored in the table object.

The incongruence flag 640 can indicate incongruence between the database table and the database view as described herein. After detecting that the database replacement view has been specified, it can be detected via the incongruence flag incongruence flag 640 that no incongruence exists between the table and the view. Otherwise, an error condition can be raised.

In a system such as that shown in FIG. 1, a table object and a view object can be used as the mapping. The application execution engine can be configured to, responsive to receiving an operation from the application specifying the database table identifier, detect that the table object representing the database table specified by the database table identifier indicates that the view object is to be used in place of the table. Then, responsive to so detecting, the reference to the database view specified by the view object can be substituted in place of the database table for the operation.

Where the system includes an SQL engine operable to perform SQL operations on the database, the application execution engine can forward the operation to the SQL engine after substituting the reference to the database view in place of the database table identifier.

### Example 14 - Example Method of Validation after Modification

FIG. 7 is a flowchart of an example method 700 implementing table-view congruence validation after a view has been modified and can be implemented, for example, in the system shown in FIGS. 1, 5, or 6. When a table or view is first created, validation can take place. Subsequent modifications can result in performance of the method 700.

At 710, a modification of the view is detected. For example, modifications to a data dictionary describing the database table and the database view can be monitored. Modifications to any view that is designated as replacing a table can be monitored. Such modifications can include adding a field, rearranging the order of fields, or the like. Modification typically involves deactivation of the modified table or view.

Likewise, changes to the table can be detected.

At 720, responsive to detection of modifications of the view, table-view congruence is validated (e.g., congruence between the database table and the database view is re-validated). Validation can be performed as described herein. If incongruence is detected, an error condition can be raised.

However, because the view can be useful independent of the table, it can still be activated with warnings if the table layout differs. Still, the runtime object for the table can be flagged to indicate that a replacement view is active but the table and view differ (e.g., incongruence flag as described herein).

At 730, responsive to a determination that validation succeeded, the table can be activated.

### Example 15 - Example Database Management System

In any of the examples herein, a database management system can take the form of a system that provides database management services. In practice, such a system is typically provided as a server providing services to a plurality of requesting clients.

Such a system can include an SQL engine that implements execution of SQL queries and other SQL operations.

### Example 16 - Example Enhanced Database Service

In any of the examples herein, an enhanced database service can be provided as part of a database management system that provides functionality beyond that offered by a typical SQL engine (e.g., beyond that provided by a lower layer of the database). For example, various functionality, optimizations, annotations, and the like can be offered by such a service. Different join types, arithmetic expressions, function expressions, and case expressions in a selectlist can be supported in view by the service. Such enhanced services can push down more functionality from the application layer into the database layer, even if the database layer is based on open systems. As a result, data transport between layers can be greatly reduced, and complex views allow the databases to account for and optimize data retrieval. Strong candidates for such technology include aggregation tables that pre-aggregate data from other tables.

To access the features of such a service, an application can create a view that is then presented by the enhanced database service. As described herein, a view mirroring a table can be created to take advantage of optimizations offered by such a service. The view can then be substituted in place of the table transparently as described herein. In this way, the application can take advantage of the enhanced database service, and re-coding of the application need not be done.

Such an enhanced service can offer a variety of domain-specific languages that can serve as a common core model for stacks on top of the service. Such languages can include a data definition language (DDL) for defining semantically rich domain data models which can be further enriched through annotations. A data dictionary can incorporate such a DDL.

The enhanced service can support a query language (QL) for conveniently and efficiently reading data based on data models as well as for defining views within a data model.

The service can also support an expression language (EL) for specifying calculated fields, default values, constraints, or the like within queries as well as for elements in data models.

In addition to the domain-specific languages, the enhanced database service can include advanced techniques for writing data, handling transactions, access control, and the like. Services can be provided independent of a particular programming language or language paradigm.

### Example 17 - Example Table-View Congruence Validation

In any of the examples herein, validating congruence between a table and a view can take the form of determining whether the table and view have the same number of columns, the same column names, in the same order, with the same types (e.g., data type, length, decimals, and the like). As described herein, the results of congruence validation can be stored and consulted at runtime. Failure of congruence can lead to an error condition. The table can thus remain in a new or revised state (e.g., not be activated).

Upon validation, the table can be placed in an active state and the replacement information can be made available in the table's runtime object. The runtime object can thus realize communication between the data dictionary and the application execution engine.

In practice, congruence may allow slight variability between the table and view. For example, includes and control field information need not be taken into account.

A complete match as described can be used to guarantee compatibility.

### Example 18 - Example Implementation

In one implementation, the enhanced database service can take the form of the Core Data Services provided by SAP SE. The application can be an ABAP program and executed by an SAP Application Server under control of a runtime system. However, the technologies can be equally applied in other computing environments.

### Example 19 - Example Execution

In one implementation, the process proceeds as follows: reading a data dictionary comprising a database table description describing a database table and a database view description describing a database view, wherein the data dictionary specifies that the database view is to replace the database table; confirming that the database table description and the database view description indicate congruent description for the database table and the database view, wherein the confirming comprises performing a congruence check; based on the database view description, creating a view object stored in memory comprising a reference to the database view; based on the database table description, creating a table object stored in memory indicating that the database table is replaced by the database view, wherein the table object comprises a reference to the view object; at runtime, when receiving a request to perform an operation on the database table, detecting that the table object indicates that the database table is to be replaced by the database view, verifying that the table object indicates that the congruence check was successful, substituting the database view for the database table, and performing the operation on the database view instead of the database table.

As described herein, replacement can be done to replace a classic view with an enhanced view (e.g., instead of replacing a table with a view).

### Example 20 - Example Advantages

The technologies described herein can provide access to enhanced database services without the need to re-code or manually replace a table with a view. In practice, large, enterprise-class software cannot be modified without expending considerable resources on the modification. Other activities such as testing and quality control also come into play when modifying such large software systems.

SELECT statements on tables can be preserved in applications without changing the code, but the table is still replaced with an enhanced view whenever the SELECT statement is executed on the table.

Similarly, attempting to manually replace a table with a view can lead to problems during the transition period. For example, extra or temporary tables need to be maintained to avoid loss or inconsistency of data.

Accordingly, it can be of great benefit to be able to replace a table transparently to the application as described herein. The resources to re-code the application can be avoided, and loss and inconsistency of data can be avoided.

### Example 21 - Example Computing Systems

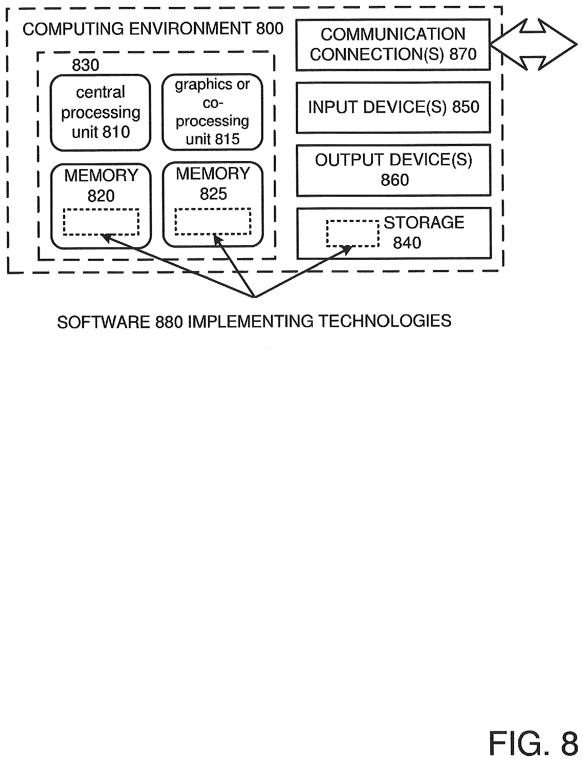

FIG. 8 illustrates a generalized example of a suitable computing system 800 in which several of the described innovations may be implemented. The computing system 800 is not intended to suggest any limitation as to scope of use or functionality, as the innovations may be implemented in diverse general-purpose or special-purpose computing systems.

With reference to FIG. 8, the computing system 800 includes one or more processing units 810, 815 and memory 820, 825. In FIG. 8, this basic configuration 830 is included within a dashed line. The processing units 810, 815 execute computer-executable instructions. A processing unit can be a general-purpose central processing unit (CPU), processor in an application-specific integrated circuit (ASIC) or any other type of processor. In a multi-processing system, multiple processing units execute computer-executable instructions to increase processing power. For example, FIG. 8 shows a central processing unit 810 as well as a graphics processing unit or co-processing unit 815. The tangible memory 820, 825 may be volatile memory (e.g., registers, cache, RAM), non-volatile memory (e.g., ROM, EEPROM, flash memory, etc.), or some combination of the two, accessible by the processing unit(s). The memory 820, 825 stores software 880 implementing one or more innovations described herein, in the form of computer-executable instructions suitable for execution by the processing unit(s).

A computing system may have additional features. For example, the computing system 800 includes storage 840, one or more input devices 850, one or more output devices 860, and one or more communication connections 870. An interconnection mechanism (not shown) such as a bus, controller, or network interconnects the components of the computing system 800. Typically, operating system software (not shown) provides an operating environment for other software executing in the computing system 800, and coordinates activities of the components of the computing system 800.

The tangible storage 840 may be removable or non-removable, and includes magnetic disks, magnetic tapes or cassettes, CD-ROMs, DVDs, or any other medium which can be used to store information in a non-transitory way and which can be accessed within the computing system 800. The storage 840 stores instructions for the software 880 implementing one or more innovations described herein.

The input device(s) 850 may be a touch input device such as a keyboard, mouse, pen, or trackball, a voice input device, a scanning device, or another device that provides input to the computing system 800. For video encoding, the input device(s) 850 may be a camera, video card, TV tuner card, or similar device that accepts video input in analog or digital form, or a CD-ROM or CD-RW that reads video samples into the computing system 800. The output device(s) 860 may be a display, printer, speaker, CD-writer, or another device that provides output from the computing system 800.

The communication connection(s) 870 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media can use an electrical, optical, RF, or other carrier.

The innovations can be described in the general context of computer-executable instructions, such as those included in program modules, being executed in a computing system on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing system.

For the sake of presentation, the detailed description uses terms like "determine" and "use" to describe computer operations in a computing system. These terms are high-level abstractions for operations performed by a computer, and should not be confused with acts performed by a human being. The actual computer operations corresponding to these terms vary depending on implementation.

### Example 22 - Computer-Readable Media

Any of the computer-readable media herein can be non-transitory (e.g., volatile memory such as DRAM or SRAM, nonvolatile memory such as magnetic storage, optical storage, or the like) and/or tangible. Any of the storing actions described herein can be implemented by storing in one or more computer-readable media (e.g., computer-readable storage media or other tangible media). Any of the things (e.g., data created and used during implementation) described as stored can be stored in one or more computer-readable media (e.g., computer-readable storage media or other tangible media). Computer-readable media can be limited to implementations not consisting of a signal.

Any of the methods described herein can be implemented by computer-executable instructions in (e.g., stored on, encoded on, or the like) one or more computer-readable media (e.g., computer-readable storage media or other tangible media) or one or more computer-readable storage devices (e.g., memory, magnetic storage, optical storage, or the like). Such instructions can cause a computing device to perform the method. The technologies described herein can be implemented in a variety of programming languages. Alternatives

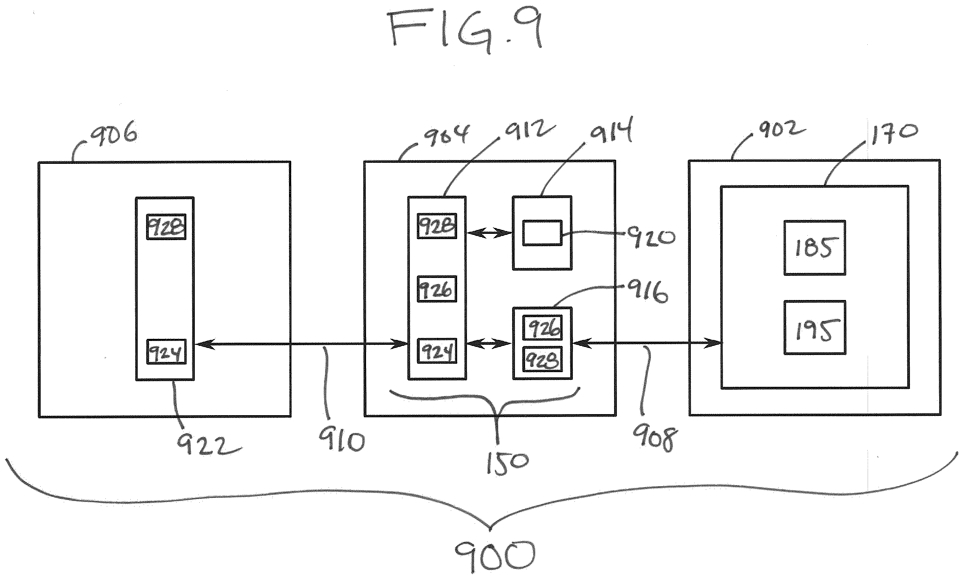

Fig. 9 shows an example of a distributed database system 900. The distributed database system comprises a database server 902, an application server 904, and a client server 906. The database server 902 and the application server 904 communicate via a first network connection 908. The client server 906 and the application server 904 communicate via a second network connection 910. In some examples the functionality of the client server 906 is incorporated into the application server 904.

The database server 902 can be seen as hosting or implementing a database management system 170. The database management system 170 contains a database which has a legacy table 185 and a replacement view 195.

The application server 904 comprises a runtime interpreter 912. The runtime interpreter 912 is connected to a dictionary 914 which contains a mapping 920 of the replacement view 195 to the legacy table 185. The runtime interpreter 912 is also connected to a database interface 916 which can send queries to and retrieve data from the database management system 170 over the first network connection 908. The client server 906 is seen as hosting an application 922. The application 922 is able to communicate to the runtime interpreter 912 via the second network connection 910.

During operation the application 922 generates a first database query 924 which is passed via the second network connection 910 to the runtime interpreter 912. The runtime interpreter 912 then checks to see if the legacy table 185 is in the mapping 920. If it is the first database query 924 is replaced with the second database query 926. The runtime interpreter 912 then passes the second database query 926 to the database interface 916. The database interface 916 passes the second database query 926 to the database management system 908 which then retrieves the data from the replacement view 195 and returns it via the first network connection 908 to the database interface 916. The database data is labeled 928. The database interface 916 then passes the database data 928 to the runtime interpreter 912 which then passes it back via the second network connection 910 to the application 922 where the data is used.

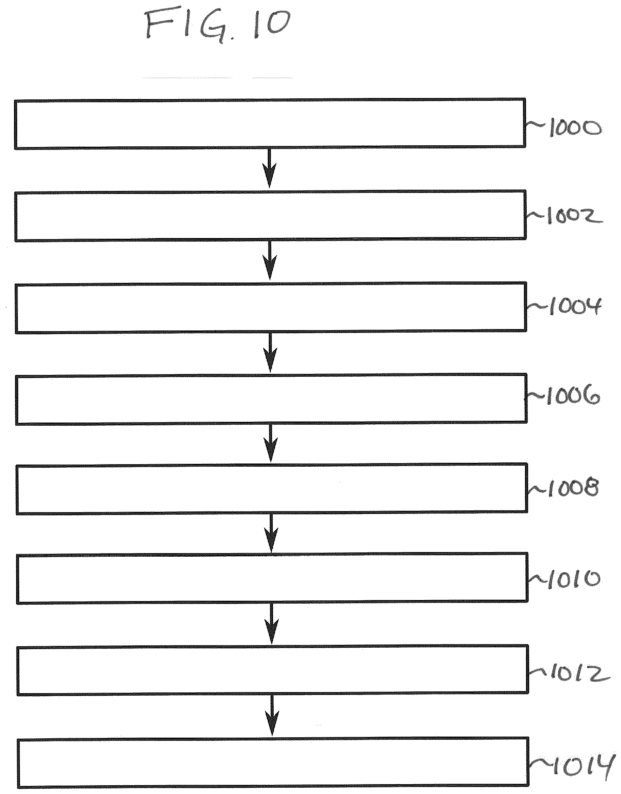

Fig. 10 shows a flowchart which illustrates an example method of operating the distributed database system 900 of Fig. 9. The first step 1000 comprises installing the replacement view 195 in the database management system 170 before receiving the first database query 924 by the runtime interpreter 912. The next step 1002 comprises generating the first database query 924 by the application 922. Next in step 1004 the application 922 sends the first database query 924 to the runtime interpreter 912. In step 1006 the first database query 924 is received by the runtime interpreter 912. Next in step 1008 the runtime interpreter 912 replaces the first database query 924 with the second database query 926 using the mapping 920. In step 1010 the database interface 916 sends the second database query 926 to the database management system 170. In step 1012 the database management system 170 retrieves the database data 928 from the replacement table 195. Finally, in step 1014 the database management system 170 forwards the database data 928 to the application server 904 via the network connection 908.

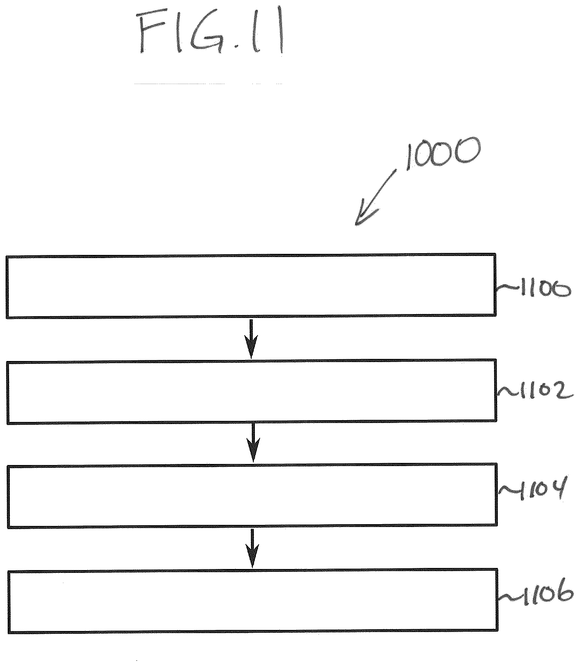

Fig. 11 shows a flowchart which illustrates the step 1000 of Fig. 10 in greater detail. First in step 1100 the database management system 170 receives the replacement view 195. Next in step 1102 the dictionary 914 receives the mapping 920 descriptive of the assignment of the legacy table 185 to the replacement view 195. Next in step 1104 the runtime interpreter 912 verifies the replacement view 195 via the network connection 908. The runtime interpreter 912 can pass messages to the database management system 170 via the database interface 916. Finally, in step 1106 the runtime interpreter 912 activates the replacement view 195 if the verification from the database management system 170 is successful.

The above explained view extensions lead to the possibility to push down more functionality from ABAP to database layer, especially because the DDL Sources are "open" which means that we only introduce functionality which exists on all database systems which are supported by SAP with the same meaning.

The use of replacement views may possibly have the following advantages:
- One can prevent too much data transport between the different layers
- Complex views allow the databases to optimize the data retrieval.

There are especially applications which work on tables whose content is a kind of pre-aggregation of data from several other tables. These - let us call them - aggregation tables contain redundant data. But, they were created to prevent too much data transfer and too slow computation when executing the aggregation on the original tables during program runtime.

With some replacement views as described herein the idea is no longer to use these pre-aggregation tables with redundant data but to possibly change them into DDL Views and work on original data. This may may result in improved performance and reduce or eliminate redundant data.

But this idea leads to the following problems: A physical change of these tables to DDL Views is not simply possible (e.g. because of complex transport and upgrade procedure) on the one hand and on the other hand we cannot define new DDL Views with new names using these tables as base objects because there are many programs, especially partner and customer programs, which already select on the tables.

One solution is to preserve the selects of the legacy database table in the programs (the orginal code does not need to be changed) but nevertheless replacing the table with a DDL view whenever a select statement is executed on the table.

In the dictionary or Data Dictionary all table and view metadata are maintained and managed. Thus, this is the place where to store the replacement information. The replacement DDL view, once defined, can be added to table metadata for a new database table as well as for an active one. In the latter case the table then changes to state revised. If the table activation is then executed then one or more of the following properties or rules may be checked:
- Table and replacement view may have the same number of columns (includes and
   other control field information is not taken into account)
- The name of the columns and the sequence of columns may be identical in table and replacement view
- The type information, data type, length, decimals have to be the same.
If these conditions are not successfully checked, the table remains in new or revised state. Otherwise we transfer the table to active state and the replacement information is available in the table's runtime object. The runtime object thus realizes the communication between Dictionary and ABAP layer, especially Open SQL in this case.
The runtime object then contains:
1. the name of the replacement view
2. a flag that a replacement is active for this table

The above mentioned checks may be executed if the table is changed in any way and activated afterwards. Thus, structural changes which do not fit with the view are always retrieved and the table then does not achieve the state active.
The same checks are executed if the view definition changes and the DDL view. But as the view is not dependent of the table, the view can be activated with warnings if the table layout differs. The view can even be used in programs without problems. So in this case we successfully activate the DDL view, but we flag the table in the runtime object with a second flag in addition to the one mentioned above:
3. a flag that a replacement DDL view is active for this table but table and view differ. This sign will be interpreted during table selection. We will see this in next chapter.

Execution of an Open SQL select statement for a table in an ABAP program causes the evaluation of the table's replacement information in the table's runtime object. If a replacement view exists (Flag 2. is set) the select statement is redirected to the view in 1.

The table replacement by a DDL view may allows bringing innovation into programs without enforcing partners and customers to change programs. The changes and extensions are all executed on, for example SAP databases, by defining DDL views and changing the application programs accordingly. On partner and customer side only the achievements of these compatible changes are positively noticed.
As a further extension to the new replacement functionality described here it is also possible to replace classical SQLViews by DDL views.
In this case an additional check is necessary. If the view is a 'writable view', meaning you can make changes on the table using this view we preferably check if the view is buffered. In this case the replacement information and necessary buffering validation information cannot be held in metadata together. User may decide between buffering and usage of replacement view.

### Boundary Conditions and Limitations

The transparent table replacement has consequently the following boundary conditions:
Boundary Condition: Only applicable for "Read scenarios"
Explanation.

Only Open SQL SELECT-statements are delegated to the replacement view. Open SQL "SELECT SINGLE FOR UPDATE"-, MODIFY-, INSERT-, UPDATE- and DELETE-Statements are still executed on the original table.

Sub SELECTs in a WHERE condition in a "SELECT SINGLE FOR UPDATE"-, UPDATE- or DELETE-statement are delegated, too.

Boundary Condition: Only applicable for Open SQL

Explanation:
The replacement view is used instead of the original table, if and only if Open SQL or the foreign key check in the dynpro is used.

So in the following cases the redirection does not take place (the list may be incomplete):
1. Usage within CDS-/DB-Views
2. IMPORT <dbtab>
3. READ <dbtab>
4. Function modules DB_SETGET, DB_SELECT_GENERIC_TABLE, DB_SELECT_FULL_TABLE
5. All accesses via RSQL or RTAB interfaces in the kernel or LM tools like R3trans and tp.

Boundary Condition: Table Buffering is by-passed

Explanation: For performance reasons, a table with a replacement view shouldn't be buffered in order to avoid unnecessary invalidations. The table buffer is by-passed due to the redirection.

### Maintenance of redirected Tables

The table boundary conditions detailed above contain some exceptions for using the redirect. As the cases regarding RSQI/RTAB/DB_SETGET commands are preferably to be redirect aware, too, so there will fail some scenarios in the future, e. g. the transport of content of a redirect table may transport more than expected. This may happen as the SQL used by the tp redirects the SELECT to the view.
In the following Open SQL means always:
- The SQL dialect that is part of the ABAP
- All access that are done via RSQL/RTAB

### Solution

To come across the problem of the new redirection, there is preferbably a possibility to maintain a redirected table. This can be done by a second table, the "maintain table" of a redirected table.
This maintain table may have the same restriction as the view and the redirected table. One or more of the following may be true:
- Number of columns are equal
- Names of corresponding columns are the same
- The types of corresponding types are technically identical.
- Position of corresponding columns are the same.

A table becomes a "maintain table", if a redirected table is set for the table. It is possible to specify, if the access to the redirected table via Data Manipulation Language (DML) operations may be permitted or not.

If a table is a "maintain table", then all operations via Open SQL are redirected to the underlying redirected table.
"Maintain tables" are only allowed for redirected tables. Hence if for a table the redirection is switched off, then an access of "maintain table" via Open SQL will cause a runtime error.

### Code Changes in the application

- If the access to a redirected table via DMLs is forbidden, then all DML statements are preferably to be adapted.
- Reading of content without redirection may be adapted, e. g. the during archiving
- If a redirected table is a customizing table, then the customizing transaction may maintain the "maintain table". The redirected table is preferably not to be used during customizing.

### Extension of redirected Tables

If a redirected table is extended, then the contract between view and maintain table breaks. So view and maintain table may be extended in the same way as the redirected table.
The check that the position of the columns are the same, can be weakened. The maintain table should be extended automatically with the "same" extension that extends the redirected table.

The technologies from any example can be combined with the technologies described in any one or more of the other examples. In view of the many possible embodiments to which the principles of the disclosed technology may be applied, it should be recognized that the illustrated embodiments are examples of the disclosed technology and should not be taken as a limitation on the scope of the disclosed technology. Rather, the scope of the disclosed technology includes what is covered by the following claims. We therefore claim as our invention all that comes within the scope of the claims.

### List of reference numerals

- 100: system
- 110: application
- 115: operation
- 120: data dictionary
- 122: table description
- 124: view description
- 150: application execution engine
- 155: table-view mapping
- 170: database management system
- 175: SQL engine
- 180: database
- 185: table
- 190: enhanced database service
- 195: view
- 200: method
- 210: at design time, receive replacement information specifying view
- 220: at runtime, receive database request from application to perform operation on table
- 230: in operation, translate reference to table to reference to view
- 240: perform operation on view instead of table
- 300: method
- 310: at design time, modify data dictionary to include indication of replacement view for table
- 320: validate replacement
- 330: activate table
- 400: method
- 410: at runtime, receive request to perform operation on table
- 420: detect replacement
- 430: substitute view for table in operation
- 440: perform operation on view instead of table
- 550: table-view mapping
- 552: table object
- 554: reference to view object
- 556: view object
- 560: reference to database view
- 610: table object
- 620: replacement view ID
- 630: indication of replacement
- 640: incongruence flag
- 700: method
- 710: detect modification of view
- 720: re-validate table-view congruence
- 730: activate table
- 800: computing system
- 810: central processing unit
- 815: graphics or co-processing unit
- 820: memory
- 825: memory
- 830: basic configuration
- 840: storage
- 850: input devices
- 860: output devices
- 870: communication connection
- 880: instructions
- 900: distributed database system
- 902: database server
- 904: application server
- 906: client server
- 908: first network connection
- 910: second network connection
- 912: runtime interpreter
- 914: dictionary
- 916: database interface
- 918: mapping
- 920: mapping
- 922: application
- 924: first database query
- 926: second database query
- 928: database data 1000 adding the replacement view to the database management system before receiving the first database query for the legacy table by the runtime interpreter
- 1002: generating the first database query by the application
- 1004: sending the first database query to the runtime interpreter by the application
- 1006: receiving a first database query for the legacy table by the runtime interpreter
- 1008: replacing the first database query with the second database query by the runtime interpreter using the mapping in the dictionary
- 1010: sending the second database query to the database server via the network connection by the database interface
- 1012: retrieving the database data from the replacement view by the database manager
- 1014: forwarding the database data from the database manager to the application server via the network connection
- 1100: receiving the replacement view by the database management system
- 1102: receiving the mapping descriptive of an assignment of the legacy table to the replacement view by the dictionary
- 1104: verifying the replacement view by the runtime interpreter via the network connection
- 1106: activating the replacement view by the runtime interpreter if the verification is successful

## Claims

1. A method of operating a distributed database system (100, 900), wherein the database system comprises:
- a first network connection (908);
- a database server (902), wherein the database server comprises a database management system (170) for managing at least one table (185) and at least one replacement view (195);
- an application server (904), wherein the application server comprises an instance of a runtime interpreter (912), wherein the runtime interpreter is an ABAP interpreter, wherein the application server comprises an instance of a database interface (916), wherein the database interface is configured for sending a second database query (926) to the database management system via the first network connection, wherein the database interface is further configured for receiving database data (928) from the database management system via the first network connection, wherein the application server comprises a dictionary (120, 914), wherein the dictionary comprises a mapping (920) descriptive of an assignment of a legacy table (185) to a replacement view (195), wherein the legacy table is one of the at least one tables, wherein the replacement view is one of the at least one replacement views, wherein the replacement view is a DDL view;
wherein the method comprises:
- receiving (1006) a first database query (924) for the legacy table by the runtime interpreter, wherein the first database query is an Open SQL query;
- replacing (1008) the first database query with the second database query by the runtime interpreter using the mapping in the dictionary;
- sending (1010) the second database query to the database server via the first network connection by the database interface, wherein the second database query is an SQL query;
- retrieving (1012) the database data from the replacement view by the database manager; and
- forwarding (1014) the database data from the database manager to the application server via the first network connection,
wherein the distributed database system further comprises an application (922), and wherein the method further comprises:
- generating (1002) the first database query by the application;
- sending (1004) the first database query to the runtime interpreter by the application;
- receiving, by the application from the application server via a second network connection (910), the database data; and
- performing, by the application, an operation on the database data, and wherein the method further comprises adding (1000) the replacement view to the database management system before receiving the first database query for the legacy table by the runtime interpreter, wherein adding the replacement view to the database management system comprises:
- receiving (1100) the replacement view by the database management system;
- receiving (1102) the mapping descriptive of an assignment of the legacy table to the replacement view by the dictionary;
- verifying (1104) the replacement view by the runtime interpreter via the first network connection; and
- activating (1106) the replacement view by the runtime interpreter if the verification is successful,
wherein verifying the replacement view by the runtime interpreter via the first network connection comprises checking any one of the following:
that the legacy table and the replacement view have an identical number of columns, that the legacy table columns and the replacement view columns have identical names and identical sequence, that the legacy table columns and the replacement view columns have identical type information, that the legacy table columns and the replacement view columns have identical data type, that the legacy table columns and the replacement view columns have an identical length, that the legacy table columns and the replacement view columns express decimals identically, and combinations thereof.

2. The method of claim 1, wherein the any one of the following, the legacy table and the replacement view have an identical number of columns, the legacy table columns and the replacement view columns have identical names and an identical sequence, the legacy table columns and the replacement view columns have identical type information, the legacy table columns and the replacement view columns have identical data type, the legacy table columns and the replacement view columns have an identical length, the legacy table columns and the replacement view columns express decimals identically, and combinations thereof.

3. The method of any one of the preceding claims, wherein the distributed database system further comprises a client server (906) and an execution engine (150), wherein the client server hosts the application, and wherein the performing further comprises executing, by the execution engine, the application for processing commands, including performing an operation on the replacement view.

4. The method of any one of the preceding claims, wherein the legacy table has a legacy table name, wherein the replacement view has a replacement view name, wherein the replacing the first database query with the second database query by the runtime interpreter using the mapping in the table is performed by replacing the legacy table name in the first database query with the replacement view name.

5. An application server (904) configured for connecting to a database server (902) via a first network connection (908), wherein the database server comprises a database management system (170) for managing at least one table (185) and at least one replacement view (195), wherein the application server comprises:
- an instance of a runtime interpreter (912), wherein the runtime interpreter is an ABAP interpreter;
- an instance of a database interface (916), wherein the database interface is configured for sending a second database query (926) to the database management system via the first network connection, wherein the database interface is further configured for receiving database data (928) from the database management system via the first network connection, wherein the application server comprises a dictionary (120, 914), wherein the dictionary comprises a mapping (920) descriptive of an assignment of a legacy table to a replacement view, wherein the legacy table is one of the at least one tables, wherein the replacement view is one of the at least one replacement view, wherein the replacement view is a DDL view;
- a memory containing machine executable instructions;
- a processor, wherein execution of the machine executable instructions cause the processor to:
- receive (1006) a first database query (924) by the runtime interpreter for the legacy table, wherein the first database query is an Open SQL query;
- replace (1008) the first database query with a second database query by the runtime interpreter using the mapping in the table wherein the second database query is an SQL query;
- forward (1010) the second database query to the database management system using the database interface via the first network connection; and
- receive (1014) the database data from the database management system using the database interface via the first network connection,
wherein execution of the machine executable instructions further cause the processor to:
- receive (1102) the mapping descriptive of an assignment of the legacy table to the replacement view made in the database management system;
- verify (1104) the replacement view by the runtime interpreter by querying the database system via the first network connection; and
- activate (1106) the replacement view by the runtime interpreter if the verification is successful,
wherein verifying the replacement view by the runtime interpreter via the first network connection comprises checking any one of the following:
that the legacy table and the replacement view have an identical number of columns, that the legacy table columns and the replacement view columns have identical names and identical sequence, that the legacy table columns and the replacement view columns have identical type information, that the legacy table columns and the replacement view columns have identical data type, that the legacy table columns and the replacement view columns have an identical length, that the legacy table columns and the replacement view columns express decimals identically, and combinations thereof.

6. A distributed database (100, 900) system comprising:
- the application server (904) of claim 5;
- the first network connection (908); and
- the database server (902),
wherein the distributed database system further comprises an application (922), and wherein the application is configured to:
- generate (1002) the first database query,
- send (1004) the first database query to the runtime interpreter,
- receive the database data from the application server, and
- perform an operation on the database data.

7. The distributed database system of claim 6, further comprising a client server (906) and an execution engine (150), wherein the client server is configured to host the application, and wherein the execution engine is configured to execute the application for processing commands, including performing an operation on the replacement view.

## Patentansprüche

1. Verfahren zum Betrieb eines verteilten Datenbanksystems (100, 900), wobei das Datenbanksystem umfasst:
- eine erste Netzwerkverbindung (908);
- einen Datenbankserver (902), wobei der Datenbankserver ein Datenbankmanagementsystem (170) umfasst, um mindestens eine Tabelle (185) und mindestens eine Ersatzansicht (195) zu verwalten;
- einen Anwendungsserver (904), wobei der Anwendungsserver eine Instanz eines Laufzeit-Interpreter (912) umfasst, wobei der Laufzeit-Interpreter ein ABAP-Interpreter ist, wobei der Anwendungsserver eine Instanz einer Datenbankschnittstelle (916) umfasst, wobei die Datenbankschnittstelle dafür ausgelegt ist, eine zweite Datenbankabfrage (926) an das Datenbankmanagementsystem über die erste Netzwerkverbindung zu senden, wobei die Datenbankschnittstelle ferner dafür ausgelegt ist, Datenbankdaten (928) vom Datenbankmanagementsystem über die erste Netzwerkschnittstelle zu empfangen, wobei der Anwendungsserver ein Wörterbuch (120, 914) umfasst, wobei das Wörterbuch ein Mapping (920) umfasst, das eine Zuordnung einer Legacy-Tabelle (185) zu einer Ersatzansicht beschreibt, wobei die Legacy-Tabelle eine der mindestens einen Tabelle ist, wobei die Ersatzansicht eine der mindestens einen Ersatzansicht ist, wobei die Ersatzansicht eine DDL-Ansicht ist;
wobei das Verfahren umfasst:
- Empfangen (1006) einer ersten Datenbankabfrage (924) für die Legacy-Tabelle durch den Laufzeit-Interpreter, wobei die erste Datenbankabfrage eine Open-SQL-Abfrage ist;
- Ersetzen (1008) der ersten Datenbankabfrage durch die zweite Datenbankabfrage durch den Laufzeit-Interpreter unter Verwendung des Mappings im Wörterbuch;
- Senden (1010) der zweiten Datenbankabfrage an den Datenbankserver über die erste Netzwerkverbindung durch die Datenbankschnittstelle, wobei die zweite Datenbankabfrage eine SQL-Abfrage ist;
- Abrufen (1012) der Datenbankdaten aus der Ersatzansicht durch den Datenbankmanager; und
- Weiterleiten (1014) der Datenbankdaten vom Datenbankmanager an den Anwendungsserver über die erste Netzwerkverbindung,
wobei das verteilte Datenbanksystem ferner eine Anwendung (922) umfasst, und wobei das Verfahren ferner umfasst:
- Generieren (1002) der ersten Datenbankabfrage durch die Anwendung;
- Senden (1004) der ersten Datenbankabfrage an den Laufzeit-Interpreter durch die Anwendung;
- Empfangen der Datenbankdaten durch die Anwendung, vom Anwendungsserver, über eine zweite Netzwerkverbindung (910); und
- Durchführen, durch die Anwendung, eines Vorgangs an den Datenbankdaten, und wobei dieses Verfahren ferner umfasst, dass die Ersatzansicht dem Datenbankmanagementsystem hinzugefügt wird (1000), bevor die ersten Datenbankabfrage für die Legacy-Tabelle durch den Laufzeit-Interpreter empfangen wird, wobei das Hinzufügen der Ersatzansicht zum Datenbankmanagementsystem umfasst:
- Empfangen (1100) der Ersatzansicht durch das Datenbankmanagementsystem;
- Empfangen (1102) des Mappings, das eine Zuordnung der Legacy-Tabelle zur Ersatzansicht durch das Wörterbuch beschreibt;
- Überprüfen (1104) der Ersatzansicht durch den Laufzeit-Interpreter über die erste Netzwerkverbindung; und
- Aktivieren (1106) der Ersatzansicht durch den Laufzeit-Interpreter, wenn die Überprüfung erfolgreich ist,
wobei das Überprüfen der Ersatzansicht durch den Laufzeit-Interpreter über die erste Netzwerkverbindung die Prüfung eines des Folgenden einschließt:
dass die Legacy-Tabelle und die Ersatzansicht eine identische Anzahl Spalten haben, dass die Spalten der Legacy-Tabelle und die Spalten der Ersatzansicht identische Namen und eine identische Sequenz haben, dass die Spalten der Legacy-Tabelle und die Spalten der Ersatzansicht Informationen identischen Typs aufweisen, dass die Spalten der Legacy-Tabelle und die Spalten der Ersatzansicht Daten identischen Typs aufweisen, dass die Spalten der Legacy-Tabelle und die Spalten der Ersatzansicht von identischer Länge sind, dass die Spalten der Legacy-Tabelle und die Spalten der Ersatzansicht Dezimale auf identische Weise ausdrücken, und Kombinationen daraus.

2. Verfahren nach Anspruch 1, wobei das eine des Folgenden, die Legacy-Tabelle und die Ersatzansicht eine identische Anzahl von Spalten haben, die Spalten der Legacy-Tabelle und die Spalten der Ersatzansicht identische Namen und eine identische Sequenz haben, die Spalten der Legacy-Tabelle und die Spalten der Ersatzansicht Informationen identischen Typs aufweisen, die Spalten der Legacy-Tabelle und die Spalten der Ersatzansicht Daten identischen Typs aufweisen, die Spalten der Legacy-Tabelle und die Spalten der Ersatzansicht von identischer Länge sind, die Spalten der Legacy-Tabelle und die Spalten der Ersatzansicht Dezimale auf identische Weise ausdrücken, und Kombinationen daraus.

3. Verfahren nach einem der vorstehenden Ansprüche, wobei das verteilte Datenbanksystem ferner einen Clientserver (906) und eine Ausführungs-Engine (150) umfasst, wobei der Clientserver die Anwendung hostet, und wobei die Durchführung ferner die Ausführung, durch die Ausführungs-Engine, der Anwendung umfasst, um Befehle zu verarbeiten, einschließlich der Durchführung eines Vorgangs an der Ersatzansicht.

4. Verfahren nach einem der vorstehenden Ansprüche, wobei die Legacy-Tabelle einen Legacy-Tabellennamen hat, wobei die Ersatzansicht einen Ersatzansichtsnamen hat, wobei das Ersetzen der ersten Datenbankabfrage durch die zweite Datenbankabfrage durch den Laufzeit-Interpreter unter Verwendung des Mappings in der Tabelle durchgeführt wird, indem der Legacy-Tabellenname in der ersten Datenbankabfrage durch den Ersatzansichtsnamen ersetzt wird.

5. Anwendungsserver (904), dafür ausgelegt, sich über eine erste Netzwerkverbindung (908) mit einem Datenbankserver (902) zu verbinden, wobei der Datenbankserver ein Datenbankmanagementsystem (170) umfasst, um mindestens eine Tabelle (185) und mindestens eine Ersatzansicht (195) zu verwalten, wobei der Anwendungsserver umfasst:
- eine Instanz eines Laufzeit-Interpreters (912) wobei der Laufzeit-Interpreter ein ABAP-Interpreter ist;
- eine Instanz einer Datenbankschnittstelle (916), wobei die Datenbankschnittstelle dafür ausgelegt ist, eine zweite Datenbankabfrage (926) an das Datenbankmanagementsystem über die erste Netzwerkverbindung zu senden, wobei die Datenbankschnittstelle ferner dafür ausgelegt ist, Datenbankdaten (928) vom Datenbankmanagementsystem über die ersten Netzwerkverbindung zu empfangen, wobei der Anwendungsserver ein Wörterbuch (120, 914) umfasst, wobei das Wörterbuch ein Mapping (920) umfasst, das eine Zuordnung einer Legacy-Tabelle zu einer Ersatzansicht beschreibt, wobei die Legacy-Tabelle eine der mindestens einen Tabelle ist, wobei die Ersatzansicht mindestens eine der einen Ersatzansicht ist, wobei die Ersatzansicht eine DDL-Ansicht ist;
- einen Speicher, der maschinenausführbare Anweisungen enthält;
- einen Prozessor, wobei die Ausführung der maschinenausführbaren Anweisungen dazu führt, dass der Prozessor:
- eine erste Datenbankabfrage (924) durch den Laufzeit-Interpreter für die Legacy-Tabelle empfängt (1006), wobei die erste Datenbankabfrage eine Open-SQL-Abfrage ist;
- die erste Datenbankabfrage durch eine zweite Datenbankabfrage durch den Laufzeit-Interpreter ersetzt (1008), unter Verwendung des Mappings in der Tabelle, wobei die zweite Datenbankabfrage eine SQL-Abfrage ist;
- die zweite Datenbankabfrage an das Datenbankmanagementsystem unter Verwendung der Datenbankschnittstelle über die erste Netzwerkverbindung weiterleitet (1010); und
- die Datenbankdaten vom Datenbankmanagementsystem unter Verwendung der Datenbankschnittstelle über die erste Netzwerkverbindung empfängt (1014),
wobei die Ausführung der maschinenausführbaren Anweisungen ferner dazu führt, dass der Prozessor:
das Mapping empfängt (1102), das eine Zuordnung der Legacy-Tabelle zur Ersatzansicht beschreibt, die im Datenbankmanagementsystem erfolgt;
- die Ersatzansicht durch den Laufzeit-Interpreter überprüft (1104), indem das Datenbanksystem über die erste Netzwerkverbindung abgefragt wird; und
- die Ersatzansicht durch den Laufzeit-Interpreter aktiviert (1106), wenn die Überprüfung erfolgreich war,
wobei das Überprüfen der Ersatzansicht durch den Laufzeit-Interpreter über die erste Netzwerkverbindung die Prüfung eines des Folgenden einschließt:
dass die Legacy-Tabelle und die Ersatzansicht eine identische Anzahl Spalten haben, dass die Spalten der Legacy-Tabelle und die Spalten der Ersatzansicht identische Namen und eine identische Sequenz haben, dass die Spalten der Legacy-Tabelle und die Spalten der Ersatzansicht Informationen identischen Typs aufweisen, dass die Spalten der Legacy-Tabelle und die Spalten der Ersatzansicht Daten identischen Typs aufweisen, dass die Spalten der Legacy-Tabelle und die Spalten der Ersatzansicht von identischer Länge sind, dass die Spalten der Legacy-Tabelle und die Spalten der Ersatzansicht Dezimale auf identische Weise ausdrücken, und Kombinationen daraus.

6. Verteiltes Datenbanksystem (100, 900), umfassend:
- den Anwendungsserver (904) von Anspruch 5;
- die erste Netzwerkverbindung (908); und
- den Datenbankserver (902),
wobei das verteilte Datenbanksystem ferner eine Anwendung (922) umfasst, und wobei die Anwendung dafür ausgelegt ist:
- die erste Datenbankabfrage zu generieren (1002),
- die erste Datenbankabfrage an den Laufzeit-Interpreter zu senden (1004),
- die Datenbankdaten vom Anwendungsserver zu empfangen, und
- einen Vorgang an den Datenbankdaten durchzuführen.

7. Verteiltes Datenbanksystem nach Anspruch 6, ferner einen Clientserver (906) und eine Ausführungs-Engine (150) umfassend, wobei der Clientserver dafür ausgelegt ist, die Anwendung zu hosten, und wobei die Ausführungs-Engine dafür ausgelegt ist, die Anwendung auszuführen, um Befehle zu verarbeiten, einschließlich der Durchführung eines Vorgangs an der Ersatzansicht.

## Revendications

1. Procédé de mise en oeuvre d'un système de base de données (100, 900) distribuée, le système de base de données comprenant :
- une première connexion réseau (908) ;
- un serveur de base de données (902), où le serveur de base de données comprend un système de gestion de base de données (170) pour gérer au moins une table (185) et au moins une vue de substitution (195) ;
- un serveur d'application (904), où le serveur d'application comprend une instance d'un interpréteur d'exécution (912), où l'interpréteur d'exécution est un interpréteur de langage ABAP, où l'application de serveur comprend une instance d'une interface de base de données (916), où l'interface de base de données est conçue pour envoyer une deuxième requête de base de données (926) au système de gestion de la base de données par le biais de la première connexion réseau, où l'interface de base de données est en outre conçue pour recevoir des données (928) de base de données à partir du système de gestion de base de données par le biais de la première connexion réseau, où le serveur d'application comprend un dictionnaire (120, 914),
où le dictionnaire comprend une mise en correspondance (920) descriptrice d'une affectation d'une table existante (185) à une vue de substitution (195), où la table existante est une parmi les au moins une table, où la vue de substitution est une parmi l'au moins une vue de substitution, où la vue de substitution est une vue DDL ;
où le procédé comprend :
- la réception (1006) d'une première requête de la base de données (924) pour la table existante par l'interpréteur d'exécution, où la première requête de la base de données est une requête SQL ouverte ;
- le substitution (1008) de la première requête de base de données par la deuxième requête de base de données par l'interpréteur d'exécution en utilisant la mise en correspondance dans le dictionnaire ;
- l'envoi (1010) de la deuxième requête de base de données au serveur de base de données par le biais de la première connexion en réseau par l'interface de base de données, où la deuxième requête de base de données est une requête SQL ;
- la récupération (1012) de la donnée de la base de données à partir de la vue de substitution par le gestionnaire de base de données ; et
- la transmission (1014) de la donnée de la base de données du gestionnaire de base de données au serveur d'application par le biais de la première connexion en réseau,
où le système de base de données comprend en outre une application (922) et où le procédé comprend en outre :
- la génération (1002) de la première requête de la base de données par l'application ;
- l'envoi (1004) de la première requête de base de données à l'interpréteur d'exécution par l'application ;
- la réception, par l'application, de la donnée de base de données à partir du serveur d'application par le biais d'une deuxième connexion en réseau (910) ; et
- l'exécution, par l'application, d'une opération sur la donnée de base de données, et où le procédé comprend en outre l'ajout (1000) de la vue de substitution au système de gestion de la base de données avant la réception de la première requête de base de données pour la table existante par 'interpréteur d'exécution, où l'ajout de la vue de substitution au système de gestion de la base de données comprend :
- la réception (1100) de la vue de substitution par le système de gestion de la base de données ;
- la réception (1102) de la mise en correspondance descriptrice d'une allocation de la table existante à la vue de substitution par le dictionnaire ;
- la vérification (1104) de la vue de substitution par l'interpréteur d'exécution par le biais de la première connexion en réseau ; et
- l'activation (1106) de la vue de substitution par l'interpréteur d'exécution si la vérification est couronnée de succès,
où la vérification de la vue de substitution par l'interpréteur d'exécution par le biais de la première connexion en réseau comprend le contrôle de l'un des faits suivants :
que la table existante et la vue de substitution ont un nombre identique de colonnes, que les colonnes de la table existante et les colonnes de la vue de substitution ont des noms identiques et une séquence identique, que les colonnes de la table existante et les colonnes de la vue de substitution ont une information de type identique, que les colonnes de la table existante et les colonnes de la vue de substitution ont un type de donnée identique, que les colonnes de la table existante et les colonnes de la vue de substitution ont une longueur identique, que les colonnes de la table existante et les colonnes de la vue de substitution expriment des décimales de manière identique, et des combinaisons de ces faits.

2. Procédé selon la revendication 1, dans lequel l'un quelconque des faits suivants, la table existante et la vue de substitution ont un nombre identique de colonnes, les colonnes de la table existante et les colonnes de la vue de substitution ont des noms identiques et une séquence identique, les colonnes de la table existante et les colonnes de la vue de substitution ont une information de type identique, les colonnes de la table existante et les colonnes de la vue de substitution ont un type de donnée identique, les colonnes de la table existante et les colonnes de la vue de substitution ont une longueur identique, les colonnes de la table existante et les colonnes de la vue de substitution expriment des décimales de manière identique, et des combinaisons de ces faits.

3. Procédé selon l'une quelconque des revendications précédentes, dans lequel le système de base de donnée distribuée comprend en outre un serveur client (906) et un moteur d'exécution (150), où le serveur client est l'hôte de l'application, et où la réalisation comprend en outre l'exécution, par le moteur d'exécution, de l'application pour traiter des commandes, incluant la réalisation d'une opération sur la vue de substitution.

4. Procédé selon l'une quelconque des revendications précédentes, dans lequel la table existante a un nom de table existante, où la vue de substitution a un nom de vue de substitution, où la substitution de la première requête de base de donnée par la deuxième requête de base de données par l'interpréteur d'exécution en utilisant la mise en correspondance dans la table est effectuée en remplaçant le nom de la table existante dans la première requête de base de données avec le nom de la vue de substitution.

5. Serveur d'application (904) conçu pour se connecter à un serveur de base de données (902) par le biais d'une première connexion en réseau (908), où le serveur de base de données comprend un système de gestion de base de données (170) pour gérer au moins une table (185) et au moins une vue de substitution (195), où le serveur d'application comprend :
- une instance d'un interpréteur d'exécution (912), où l'interpréteur d'exécution est un interpréteur ABAP ;
- une instance d'une interface de base de données (916), où l'interface de base de données est conçue pour envoyer une deuxième requête de base de données (926) au système de gestion de la base de données par le biais de la première connexion réseau, où l'interface de base de données est en outre conçue pour recevoir des données (928) de la base de données à partir du système de gestion de base de données par le biais de la première connexion réseau, où le serveur d'application comprend un dictionnaire (120, 914), où le dictionnaire comprend une mise en correspondance (920) descriptrice d'une affectation d'une table existante à une vue de substitution, où la table existante est une parmi les au moins une table, où la vue de substitution est une parmi l'au moins une vue de substitution, où la vue de substitution est une vue DDL ;
- une mémoire contenant des instructions exécutables par machine ;
- un processeur, où l'exécution des instructions exécutables par machine fait en sorte que le processeur :
- reçoive (1006) une première requête de la base de données (924) pour la table existante par l'interpréteur d'exécution, où la première requête de la base de données est une requête SQL ouverte ;
- substitue (1008) la première requête de base de données par une deuxième requête de base de données par l'interpréteur d'exécution en utilisant la mise en correspondance dans la table, où la deuxième requête de base de données est une requête SQL ;
- transmette (1010) la deuxième requête de base de données au gestionnaire de base de données en utilisant l'interface de la base de données par le biais de la première connexion en réseau, et
- reçoive (1014) la donnée de base de données à partir du système de gestion de base de données en utilisant l'interface de base de données par le biais de la première connexion en réseau,
où l'exécution des instructions exécutables par machine fait en sorte que le processeur :
- reçoive (1102) la mise en correspondance descriptive d'une allocation de la table d'exécution à la vue de substitution faite dans le système de gestion de base de données ;
- vérifie (1104) la vue de substitution par l'interpréteur d'exécution en faisant une requête au système de base de donnés par le biais de la première connexion en réseau ; et
- active (1106) de la vue de substitution par l'interpréteur d'exécution si la vérification est couronnée de succès,
où la vérification de la vue de substitution par l'interpréteur d'exécution par le biais de la première connexion en réseau comprend le contrôle de l'un des faits suivants :
que la table existante et la vue de substitution ont un nombre identique de colonnes, que les colonnes de la table existante et les colonnes de la vue de substitution ont des noms identiques et une séquence identique, que les colonnes de la table existante et les colonnes de la vue de substitution ont une information de type identique, que les colonnes de la table existante et les colonnes de la vue de substitution ont un type de donnée identique, que les colonnes de la table existante et les colonnes de la vue de substitution ont une longueur identique, que les colonnes de la table existante et les colonnes de la vue de substitution expriment des décimales de manière identique, et des combinaisons de ces faits.

6. Système de base de données distribuée (100, 900) comprenant :
- le serveur d'application (904) selon la revendication 5 ;
- la première connexion en réseau (908) ; et
- le serveur de base de données (902),
où le système de base de données distribué comprend en outre une application (922), et
où l'application est conçue pour :
- générer (1002) la première requête de base de données,
- envoyer (1004) la première requête de base de données à l'interpréteur d'exécution,
- recevoir la donnée de base de données à partir du serveur d'application, et
- effectuer une opération sur la donnée de base de données.

7. Système de base de données distribuée selon la revendication 6, comprenant en outre un serveur client (906) et un moteur d'exécution (150), où le serveur client est conçu pour être l'hôte de l'application, et où le moteur d'exécution est conçu pour exécuter l'application pour des commandes de traitement, incluant la réalisation d'une opération sur la vue de substitution.
